# EUROPEAN PATENT APPLICATION

(11) **EP 1 879 345 A1**
(43) Date of publication of application: **16.01.2008**
(21) Application number: 06253636.2
(22) Date of filing: 12.07.2006
(51) Int. Cl.: H04L 29/06

(54) **Method for sending a Session Initiation Protocol (SIP) message using SIP encapsulation**

(71) Applicant: British Telecommunications Public Limited Company, London EC1A 7AJ (GB)
(72) Inventor: The designation of the inventor has not yet been filed
(74) Representative: Lau, Chi-Fai

(57) **Abstract**

A method of sending a session initiation protocol message from a source user agent to a destination user agent in a communications network, said method comprising the steps of: sending by the source user agent a first message, wherein said first message is a session initiation protocol message addressed to the destination user agent; intercepting the first message by an application server; encapsulating by the application server the first message inside the message body of a second message, wherein said second message is a session initiation protocol message comprising an indicator, said indicator indicating that said second message has a message body comprising another session initiation protocol message; sending the second message to the destination user agent; detecting by a parsing application the indicator in the second message; and parsing by the parsing application the second message to give the encapsulated first message, and providing the parsed second message to the destination user agent.

## Description

### Field of the Invention

This invention relates to a method of sending a message in a communications network, in particular method for sending a session initiation protocol message by encapsulation in another session initiation protocol message.

### Background to the Invention

The Session Initiation Protocol (SIP) is an application-layer signalling protocol developed by the Internet Engineering Task Force (IETF) for initiating, modifying, and terminating real-time user sessions over an Internet Protocol (IP) network.

One of the main SIP objectives is the communication between multimedia devices. SIP makes this type of communication possible when used in conjunction with other protocols. SIP is a signalling protocol that enables one user agent to place a call with another user agent and to negotiate parameters of a session. The session description protocol (SDP) is used for describing the parameters relating to the user agents' capabilities, codification type, session content etc. The actual audio, video or other multimedia data is exchanged between the user agents in the session using an appropriate transport protocol. In many cases, the transport protocol is RTP (real time transport protocol).

SIP can be used to establish sessions for features such as audio/videoconferencing, interactive gaming, and call forwarding deployed over IP networks, thus enabling service providers to integrate basic IP telephony services with Internet, e-mail, and chat services. It is based on request and response messages and reuses many concepts of standards like HTTP and SMTP. SIP uses similar header fields, encoding rules and status codes of HTTP, thus providing a readable text based format for displaying information.

In November 2000, SIP was also accepted by the 3^{rd} Generation Partnership Project (3GPP) as the preferred signalling protocol for 3^{rd} generation (3G) mobile networks. The 3GPP version of SIP has been modified and differs from the original IETF version.

As the IETF version of SIP and the 3GPP version of SIP are not entirely compatible, a SIP message originating from a user agent in 3G network may not be understood by a user agent in another network using IETF SIP, and vice versa.

This gives rise to one of the problems facing SIP. How does one overcome the incompatibility issue between the different versions of SIP, such as 3GPP and IETF? The most common solution is through the use of a border gateway between the two disparate SIP networks, which performs translation between the SIP versions, such as between IETF SIP and 3GPP SIP.

However, such a solution is computationally intensive and complex. The problem is multiplied when the source and destination user agents both reside in a different, but SIP compatible networks, linked by a different incompatible SIP network. For example, two IETF SIP networks linked by a 3GPP SIP network. The result is that when a user agent sending an IETF SIP message originating from the IETF SIP network to a user agent in the other IETF SIP network, the IETF SIP message must pass through the 3G network. Thus, the SIP messages must be translated from an IETF SIP message into a 3GPP SIP message to enable it to be transmitted through the 3G network, and then translated again from a 3GPP SIP message back to an IETF SIP message for onward transmission in the destination IETF SIP network to the other user agent. It is clear that such a situation will become increasingly common as different SIP based networks start becoming more and more prevalent.

The 3GPP version of SIP modifies some of the headers in a SIP message during use. However, the IETF mandates that certain headers should not be modified in its version of SIP. This has another undesirable consequence in 3GPP SIP of destroying some of the security functions in IETF SIP where some of the headers are used to validate the content of the message. These include S/MIME, which is used to validate that a message has not been tampered with. Modifying of SIP headers under 3GPP clearly negates such functionality.

Another problem in SIP based networks is that SIP messages are sent in plain text through the network, so whilst the body of the message may be encrypted, the header information remains visible and readable. Hence, an eavesdropper using a network protocol analyser, such as Ethereal, can easily determine the source and destination of the SIP message, which is may be undesirable.

Yet another similar problem relates to SIP entities such as SIP proxy servers. SIP proxy servers are able to send SIP messages on behalf of other SIP entities, such as a SIP user agent. Most Sip proxy servers work in a transparent manner, and obscure from the destination user agent the participation of the proxy server in transporting the SIP message. Thus, it can be difficult to keep a trace of which entities in a SIP network have been involved in the handling of a SIP message. This may be particularly important when attempting to determine where delays are occurring in a network.

### Summary of the Invention

It is the aim of embodiments of the present invention to address one or more of the above-stated problems.

According to one aspect of the present invention, there is provided a method of sending a session initiation protocol message from a source user agent to a destination user agent in a communications network, said method comprising the steps of:
sending by the source user agent a first message, wherein said first message is a session initiation protocol message addressed to the destination user agent;
intercepting the first message by an application server;
encapsulating by the application server the first message inside the message body of a second message, wherein said second message is a session initiation protocol message comprising an indicator, said indicator indicating that said second message has a message body comprising another session initiation protocol message;
sending the second message to the destination user agent;
detecting by a parsing application the indicator in the second message; and
parsing by the parsing application the second message to give the encapsulated first message, and providing the parsed second message to the destination user agent.

Preferably, the first message is a session initiation protocol message of a first version, the second message is a session initiation protocol message of a second version, and the first and second versions are different.

The destination user agent may comprise the parsing application. Alternatively, the network may comprise a further application server, and the further application server comprises the parsing application.

Preferably, the source user agent and the application server are located in a first part of the network; the further application server and the destination user agent is located in a second part of the network, and the second message is sent by the application server to the further application server via a third part of the network.

The first and second parts of the network may operate in accordance with the first version of the session initiation protocol, and the third type of network operates in accordance with the second version of the session initiation protocol. For example, the first version of the session initiation protocol may be IETF SIP, and the second version of the session initiation protocol may be 3GPP SIP.

Alternatively, encapsulation may further comprise altering the content of the first message. Altering may comprise encrypting the first message before encapsulation in the body of the second message.

In some embodiments, the destination user agent may be located in an unsecured part of the network.

Embodiments of the present invention provide a lightweight level of security by obscuring the sending party's address and at the same time revealing the addresses of the intermediate forwarding entities.

Furthermore, if-lightweight security is sufficient in the network, the use of other security provisions such as IPSec or similar can be avoided. Indeed, the embodiments of the invention would be particularly useful where IPSec is not available.

In a 3GPP context, as the header of original SIP message is untouched, S/MIME security provisions under IETF SIP can be maintained.

Most importantly, when traversing network types operating under different versions of SIP, such as IETF SIP and 3GPP SIP, there is no need for complex translation modules or gateways at the boundaries of the networks. By applying the invention, a SIP message can be transferred across disparate SIP networks in a simpler and more efficient manner.

### Brief Description of the Drawings

For a better understanding of the present invention reference will now be made by way of example only to the accompanying drawings, in which:
Figure 1 is a network diagram illustrating a SIP arrangement in one embodiment of the present invention;
Figure 2 is a detailed diagram of a SIP application server in an embodiment of the present invention;
Figure 3 is a message flow diagram in an embodiment of the present invention;
Figure 4 is a network diagram illustrating another embodiment of the present invention with a secured and an unsecured network;
Figure 5 is a network diagram in a further embodiment of the present invention with networks operating under different versions of SIP;
Figure 6 is a diagram illustrating a typical SIP message;
Figure 7 is diagram illustrating a SIP message in an embodiment of the present invention.

### Description of Preferred Embodiments

The present invention is described herein with reference to particular examples. The invention is not, however, limited to such examples.

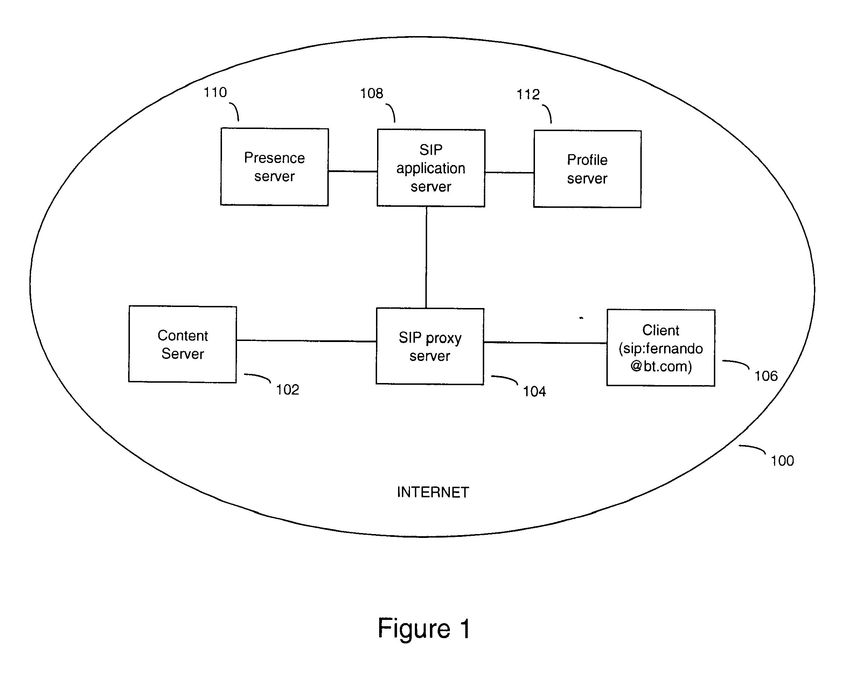

Figure 1 illustrates one embodiment of the present invention with a network 100 comprising a content server 102, a SIP proxy server 104 and a client 106. The network 100 is the Internet, but can be any other type of network that can support SIP, such as a local area network. In this example, the content server 102 is a video streaming server and the client 106 is a PDA or laptop. These "endpoints" 102 and 106 can be varied and based on existing hardware modules adapted to operate using SIP, such as SIP phones. Thus, a normal laptop installed with a suitable software application could utilise SIP for establishing and terminating a communication session.

The SIP proxy server 104 is used to route requests from one user agent, such as the content server 102, to the location of another user agent, such as the client 106. The SIP proxy server 104 also performs other functions such as authentication of user agents and providing other features to user agents.

All the entities in the network 100 are identified by a SIP address or URI (uniform resource indicator). SIP URIs have a format based on e-mail address formats, namely "user@domain". In this example, the client 106 has a SIP URI of "sip:fernando@bt.com". All SIP messages are sent using the SIP URI of the both the destination entity and the SIP URI of the source entity.

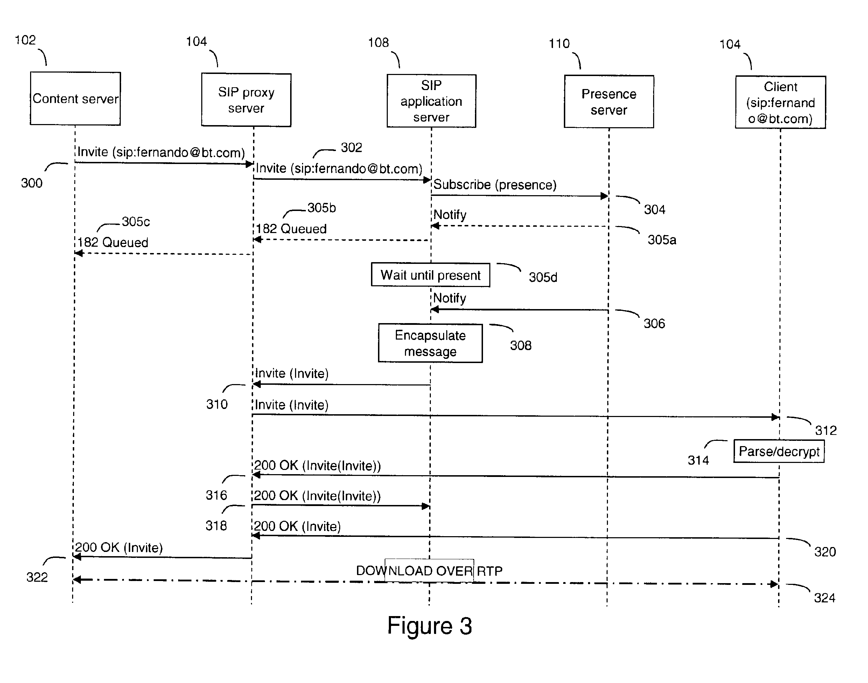

A SIP application server 108 is connected to the SIP proxy server 104. The operation of the SIP application server 108 is described in more detail in Figure 3 below. Briefly, the SIP application server 108 is used to determine when a SIP message being handled by the SIP proxy server 104 needs to be encapsulated within another SIP message, and also performs this operation. The SIP application server 108 is also connected to a presence server 110 and a profile server 112.

The presence server 110 provides presence information relating to the presence status of a user agent to SIP servers in the network, such as the SIP application server 108. Examples of presence status include "busy", "online", and out of office". The SIP application server 108 can subscribe to notifications from the presence server 110 for updates to any changes in a user agents' presence status. The profile server 112 provides general information relating to the preferences of a user agent, such as whether SIP messages should be sent securely (encrypted).

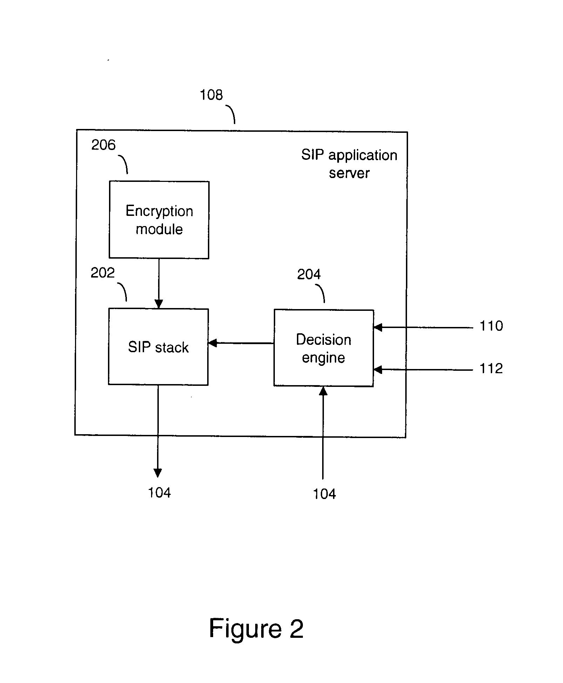

The SIP application server 108 is illustrated in more detail in Figure 2, and includes a SIP stack 202, a decision engine 204 and an encryption module 206.

SIP messages are passed from the SIP proxy server 104 to the decision engine 204 in the SIP application server 108, and SIP messages are modified and output by the SIP stack 202.

The decision engine 204 decides whether a SIP message received from the SIP proxy server 104 requires encapsulation before onward transmission to its destination. The decision is based on parameters received from the policy server 112 as well as information from the presence server 110. The decision can also be based on other network parameters.

The SIP stack 202 is a functional module that receives and builds SIP messages. The SIP stack 202 can also send SIP messages to the SIP proxy server 104.

The encryption module 206 is used to encrypt a SIP message received from the proxy server 104 if it is decided by the decision engine 204 that encryption is required.

It should be noted that the SIP application server 108, the presence server 110 and the profile server 112, though illustrated as separate servers, may be in implemented within the same physical server, such as the proxy server 104. The difference between these servers, as with most SIP servers, is a logical difference and not necessarily a physical one.

The operation of the SIP application server 108 in the context of the present invention will now be described in more detail with reference to the message flow diagram of Figure 3. References in Figure 3 to the elements found in Figure 1 are made using like reference numerals.

In the embodiment in Figure 3, the SIP application server 104 processes a SIP Invite message sent from the content server 102 to the client 106. A person skilled in the art will appreciate that the same method can be applied to other types of SIP messages as well such as REGISTER, SUBSCRIBE, OPTIONS and SIP response messages, such as 200 OK.

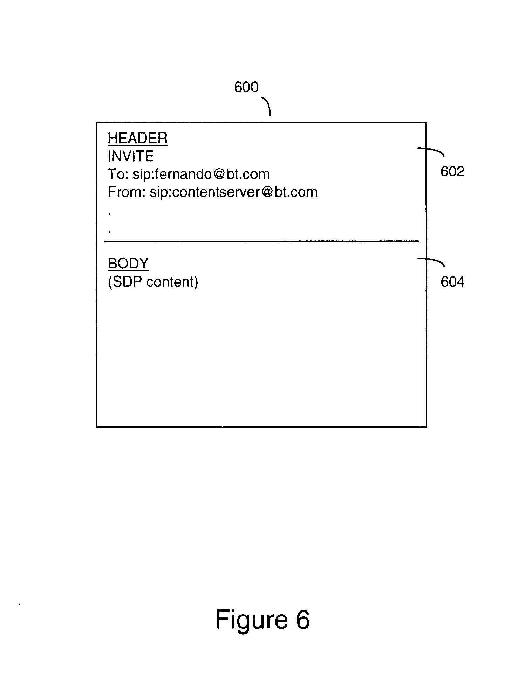

In Figure 3, the client 106 has already registered with the content server 102 for access to its services. These services may include video and audio downloads. When the content server 102 has some new content, it sends a SIP Invite message in step 300 to the SIP proxy server 104 addressed to the client 106 to "invite" the client 104 to download the new content. Figure 6 illustrates a simplified SIP Invite message 600 sent by the content server 102 in step 300. The SIP Invite message 600 comprises a SIP header 602 and a SIP body 604. The SIP header 602 contains the SIP address of the destination of the SIP message, the client, and the source of the SIP message, the content server.

In step 302, the SIP Invite message is received by the SIP proxy server 104 and forwarded on to the SIP application server 108. The SIP proxy server 104 includes filters or rules in its SIP stack to recognise certain SIP messages and to forward the SIP message to the SIP application server 108 for processing, rather than to forward the message on to the client as specified by the destination address in the SIP message header. The messages that are forwarded to the SIP application server 108 may be selected based on a predefined set of destination addresses for example that have subscribed to the service provided by the present invention.

In step 304, the SIP application 108 sends a SIP Subscribe message to the presence server 110 to determine whether the client 106 is available to receive this requested call from the content server 102. The SIP Subscribe message will include the SIP address of the client 106.

The processing of the SIP application server then varies depending on the status of client 106 received from the presence server 110.

If the client 106 is unavailable, for example if he has set his status to "off-line" or "out of office", then the presence server 110 sends a SIP Notify message in step 305a to the SIP application server 108 to indicate this. The SIP application server 108 then sends a SIP 182 Queued message to the SIP proxy server 104 to indicate no positive response to the forwarded IP Invite message in step 305b, and that the SIP application server 108 is awaiting a positive response from the presence server 110. Similarly, the SIP proxy server 104 also sends a SIP 182 Queued message in step 305c to the content server 102. Meanwhile, the SIP application server waits for a positive response from the presence server 110 in step 305d.

Once the client 106 becomes or is available, for example when the client status changing to "on-line" from "off-line", the presence server 110 sends a SIP Notify message to the SIP application server in step 306 to report the change in status.

The SIP application server 108 then decides whether encapsulation of the original SIP Invite message sent by the content server is required. As described above, this is done by the decision engine 204, which takes into account various parameters and rules from the profile server 110 and other network resources. For example, the decision engine 204 may receive preference information from the profile server 112 stating that all messages sent to this client 106 should be lightly secured by encapsulating the SIP message in the body of another SIP message without encryption or alteration.

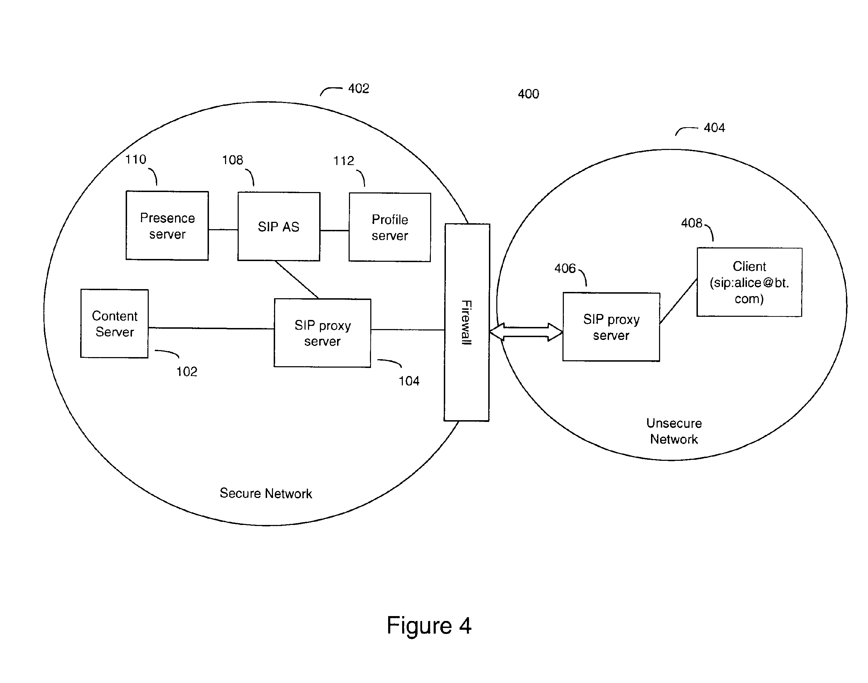

Alternatively, the decision engine 204 may decide that all SIP messages sent to the client 106, or perhaps all messages from a particular source, must be encrypted and then encapsulated in another SIP message for security reasons. This may also be necessary if the decision engine 204 determines that the client 408 is in an unsecured network and thus any messages that are forwarded must be secured before onward transmission. This scenario is illustrated in more detail in Figure 4 and will be described later.

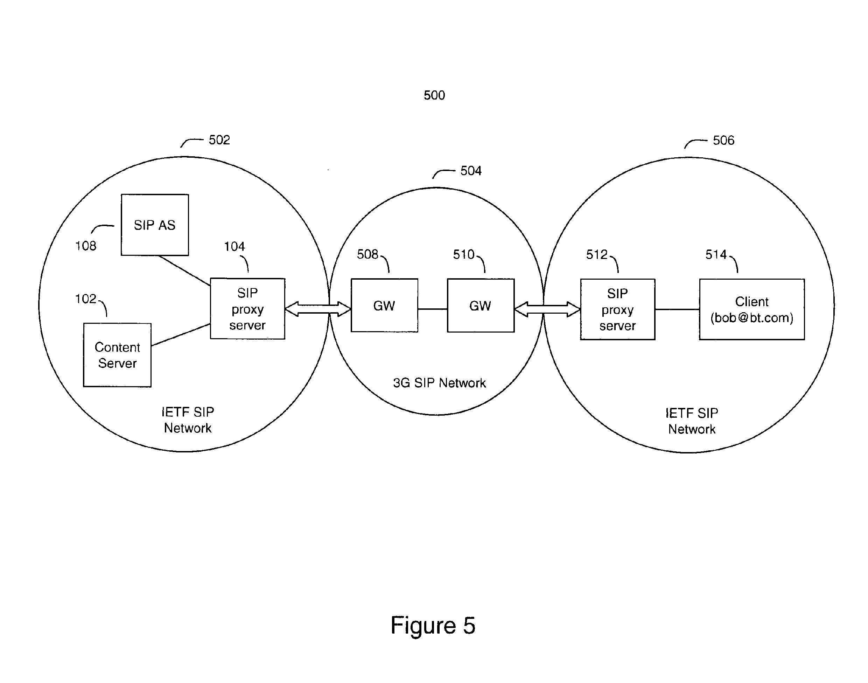

It may also be determined that the client 106 can only be reached via an intermediate network operating a different version of SIP, and thus encapsulation of the original SIP message within another SIP message of the SIP version of the intermediate network. This last situation is explored in more detail with reference to Figure 5 later.

For the purpose of this example, the decision engine 204 decides only to encapsulate the SIP Invite message in another SIP Invite message in order to lightly secure the message and also to provide an indicator of the SIP proxy server 104 handling the message. This decision is communicated to the SIP stack 202. The SIP stack 202 performs the encapsulation according to the decision engine's request.

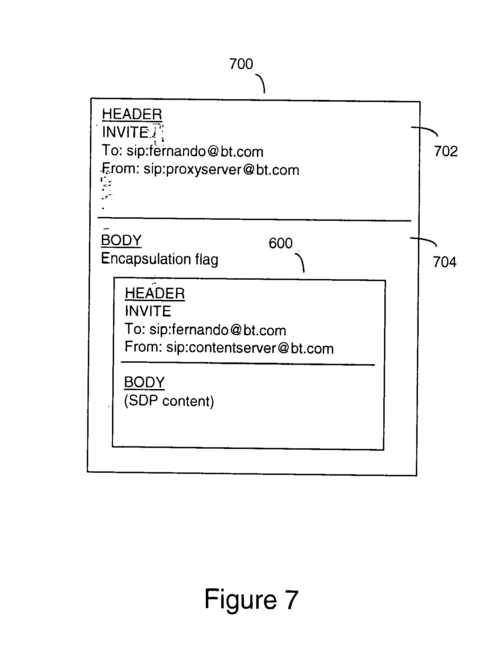

Figure 7 illustrates the original SIP Invite message 600 encapsulated in the body 704 of another SIP Invite message 700 in this example. The new SIP Invite message body 704 not only holds the original SIP Invite message 600, but also includes a flag to denote the new SIP Invite message 700 as being an encapsulated SIP message. The header of the new SIP Invite message retains the original destination address (of the client 106), but may modify the source address to be the address of the SIP proxy server 104. As such, if the message is delayed for some reason, it is possible to determine from a modified "from" field which element in the network may be causing the delay.

The decision and actual encapsulation of the first SIP Invite message in the message body of a second SIP Invite message is performed in step 308.

In step 310, the new SIP Invite message is sent to the SIP proxy server 104, which forwards the new message onto the client 106 in step 312.

In step 314, the client processes the received message. The client is able to do this as it also contains a modified SIP stack 202 similar to the one present in the SIP application server 108. This modified SIP stack includes a parser that is able to detect the modified SIP message with an encapsulated SIP message in the message body, and extract and parse the original SIP message. This is based on detecting the presence of the encapsulation flag in the body of the main SIP message.

The client first sends a response to acknowledge the receipt of the modified SIP message in step 316 by sending a SIP 200 OK message to the SIP proxy server 104. This is forwarded to the SIP application server 108 in step 318.

Once the original SIP message is extracted, the client 106 also determines if it wishes to establish a session with the content server 102 as suggested in the extracted SIP Invite message. If the client 106 decides to continue with establishing a session with the content server 102, it does so by sending a SIP 200 OK message to the content server 102 to accept the original SIP Invite. The SIP 200 OK message is sent with a destination address of the content server 102, which is extracted from the source field of the original SIP Invite message. This SIP 200 OK message is sent via the SIP proxy server in step 320, which then forwards the message on to content server 102 in step 322.

Once the content server has received the SIP 200 OK message from the client 106, acknowledgement of the content server's request to establish a session is complete and a communications channel for downloading the specified content can be opened in step 324. Data communicated during the actual session is transferred using RTP or other transport protocol suitable for the network 100.

It should be appreciated that the whilst only the original SIP Invite message has been encapsulated in the above example, any of the other SIP messages could also be encapsulated as they cross the boundary of the SIP proxy server 104. The process of deciding when to encapsulate and denoting encapsulation with a suitable flag or similar is the same with other SIP messages as described above.

Figure 4 illustrates another embodiment of the present invention. Figure 4 shows 2 networks 402 and 404. Network 402 is a secure network. For example, it may be a secure corporate network. In contrast, network 404 is an unsecured network, such as a public Wi-Fi connection to the Internet. The client 408 now resides in the unsecured network. As such, any transmissions from the content server 102 to the client 408 must be secured first.

Therefore, messages sent from the content server 102 to the client 408 are captured by the SIP proxy server 104 and transmitted to the SIP application server 108, which encrypts and encapsulates the original message before onward transmission to the client 408. Referring to Figure 3, in this example shown in Figure 4, the client 106 is replaced by the client 408. The steps illustrated in Figure 3 remain the same, except for the specifics of steps 308 and 314.

In step 308, the SIP application server determines that the client 408 for which the message is destined resides in an unsecured network 404 and thus encrypts the message sent by the content server 102 and then encapsulates it in the body of a new message. Then in step 314, the client 408 parses and decrypts the received SIP message to reveal the original unencrypted SIP message sent by the content server 102.

Thus, the client 408 in this example also contains a decryption module for decrypting any messages received with encrypted message bodies. The SIP proxy server 406 in network 404 performs a routing function, forwarding traffic sent to and from the client 408.

Figure 5 illustrates yet another embodiment of the present invention, consisting of 3 different networks. Networks 502 and 506 both operate under the standard IETF version of SIP. Network 504 operates under the 3GPP version of SIP. For example, network 502 may be the Internet, whereas network 504 may be the core network of a 3G mobile cellular network.

In the IETF SIP network 502, there is a content server 102, a SIP proxy server 104 and a SIP application server 108. Other servers, such as a presence server, have been omitted for simplicity. The SIP proxy server 104 can communicate with the 3G SIP network 504 via a gateway 508 in the 3G SIP network. There is also shown a further gateway 510 in network 504, however, the function of the further gateway 510 may be incorporated into the first gateway 508. The 3G SIP network 504 can communicate with the IETF SIP network 506 through the further gateway 510 and a SIP proxy server 512 residing in the IETF SIP network 506. A client 514 is connected to the SIP proxy server 512.

In this embodiment, the content server 102 in the IETF SIP network 052 is trying to establish a communication session with the client 514 in the other IETF SIP network 506. Both networks 502 and 504 operate compatible versions of SIP, so any IETF version of a SIP message sent by the content server 102, can be processed by the client 514. However, the problem in this embodiment is that any IETF SIP messages being sent from the content server 102 to the client 514 have to traverse the 3GPP SIP network 504, which is not capable of handling the incompatible IETF SIP message without first translating the version of the message from IETF to 3GPP.

The present embodiment solves this problem by applying the technique described with reference to Figure 3. In this embodiment, the SIP proxy server 104 and the SIP application server 108 perform the same function as in Figure 3. However, the difference is that the SIP application server 108 determines that the SIP message to be sent to the client 514 is to be transmitted over the 3GPP SIP network 504, so encapsulates the message in the body of a 3GPP SIP message rather than another SIP message of the same version as in Figure 3. This 3GPP SIP message, encapsulating the original IETF SIP message, can then be transferred to the gateway 508, which is able to easily transfer the message across the 3GPP SIP network 504 to the other gateway 510. Gateway 510 then sends the encapsulated SIP message to the SIP proxy server 512, which parses the 3GPP SIP message to reveal the original IETF SIP message sent by the contents server 102, and forwards it on to the client 514. The process of parsing the 3GPP SIP message may be performed by an appropriately configured SIP application server similar to the SIP application server 108 in network 502.

The result of the encapsulation of one version of SIP message inside a different version of SIP message in this embodiment is that no translation of the message is required to transfer messages across networks operating with the different version of SIP.

It should be noted that the process of encapsulation at the SIP application server 108 and un-encapsulation at the SIP proxy server 512 can be performed instead at the gateways 508 and 510 respectively.

A person skilled in the art will appreciate that whilst the above examples refer to a content server sending messages to a client, various specific end point devices can be used in their place, as long as they are able to send and receive SIP messages.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of sending a session initiation protocol message from a source user agent to a destination user agent in a communications network, said method comprising the steps of:
sending by the source user agent a first message, wherein said first message is a session initiation protocol message addressed to the destination user agent;
intercepting the first message by an application server;
encapsulating by the application server the first message inside the message body of a second message, wherein said second message is a session initiation protocol message comprising an indicator, said indicator indicating that said second message has a message body comprising another session initiation protocol message;
sending the second message to the destination user agent;
detecting by a parsing application the indicator in the second message; and
parsing by the parsing application the second message to give the encapsulated first message, and providing the parsed second message to the destination user agent.

2. A method as claimed in claim 1, wherein the first message is a session initiation protocol message of a first version, the second message is a session initiation protocol message of a second version, and the first and second versions are different.

3. A method as claimed in claim 1 or claim 2, wherein the destination user agent comprises the parsing application.

4. A method as claimed in claim 2, wherein the network comprises a further application server, and the further application server comprises the parsing application.

5. A method as claimed in claim 4, wherein:
the source user agent and the application server are located in a first part of the network;
the further application server and the destination user agent is located in a second part of the network, and the second message is sent by the application server to the further application server via a third part of the network.

6. A method as claimed in claim 5, wherein the first and second parts of the network operate in accordance with the first version of the session initiation protocol, and the third type of network operates in accordance with the second version of the session initiation protocol.

7. A method as claimed in claim 6, wherein the first version of the session initiation protocol is IETF SIP, and the second version of the session initiation protocol is 3GPP SIP.

8. A method as claimed in any preceding claim, wherein encapsulation further comprises altering the content of the first message.

9. A method as claimed in claim 8, wherein the altering comprises encrypting the first message before encapsulation in the body of the second message.

10. A method as claimed in claim 9, wherein the destination user agent is located in an unsecured part of the network.
